# FASCICULE DE BREVET EUROPEEN

(11) **EP 2 364 594 B1**
(45) Date de publication et mention de la délivrance du brevet: **24.07.2013**
(21) Numéro de dépôt: 10305233.8
(22) Date de dépôt: 08.03.2010
(51) Int. Cl.: A21C 5/02

(54) **Procédé de division de pâte en pâtons**
Teigportionierverfahren
Dough dividing method

(43) Date de publication de la demande: 14.09.2011
(73) Titulaire: VM (Sociéte par Actions Simplifiée), 67120 Duttlenheim (FR)
(72) Inventeur: Voegtlin, Claude, 67370, Pfulgriesheim (FR)
(74) Mandataire: Nuss, Laurent

(56) Documents cités:
- WO-A1-96/32845
- WO-A1-2010/064908
- DE-A1- 2 949 562
- DE-A1- 2 950 127
- DE-A1- 3 911 521
- FR-A1- 2 902 293

## Description

La présente invention concerne le domaine de la fabrication industrielle de produits de boulangerie, viennoiserie ou analogue et a pour objet un procédé de division volumétrique de pâte en pâtons.

On sait que le rôle d'une diviseuse de pâte de boulangerie, viennoiserie ou analogue utilisée industriellement, est de couper des morceaux de pâte en provenance d'un pétrin dans le but d'obtenir des pâtons d'un poids constant, compris généralement entre 20 g à 1kg.

Pour obtenir de tels pâtons, on connaît déjà des diviseuses volumétriques dites « à tiroirs » comprenant, d'une part, une trémie alimentée par des lots de pâte à diviser de 20 à 60 kg provenant d'un pétrin, une chambre de gavage surmontée par ladite trémie qui débouche dans la chambre de gavage de manière à permettre à ladite pâte de transiter depuis la trémie jusque dans ladite chambre de gavage qui comporte une ouverture d'entrée et une ouverture de sortie de la pâte, d'autre part, une chambre de dosage comportant une ouverture d'entrée/sortie de la pâte.

La chambre de gavage est généralement associée à un couteau coulissant, placé au-dessus de l'ouverture d'entrée de la chambre de gavage et apte, d'une part, à trancher la pâte en sortie de trémie, notamment une fois que ladite chambre de gavage est remplie et, d'autre part, à obturer le passage de la pâte entre ladite trémie et ladite chambre de gavage, c'est-à-dire en obturant à la fois l'ouverture de la partie basse de la trémie et l'ouverture d'entrée de la chambre de gavage.

D'autre part, la chambre de gavage renferme un piston gaveur apte à être déplacé dans cette dernière pour pousser la pâte, à travers son ouverture de sortie, dans la chambre de dosage, à travers son ouverture d'entrée/sortie, lorsque lesdites ouvertures respectives de la chambre de dosage et de la chambre de gavage sont situées en vis-à-vis l'une de l'autre. La chambre de dosage renferme, quant à elle, un piston doseur apte à être déplacé dans ladite chambre de dosage pour pousser la pâte et l'éjecter, par son ouverture d'entrée/sortie, sous la forme d'un pâton ainsi réalisée sur un tapis d'évacuation.

En outre, un coulisseau de montée/descente de la chambre de dosage permet de guider le déplacement de cette dernière dans un plan sensiblement vertical et de l'amener depuis un point bas permettant d'éjecter le pâton sur le tapis d'évacuation jusqu'à un point haut permettant de positionner l'ouverture d'entrée/sortie de la chambre de dosage en vis-à-vis et en continuité de l'ouverture de sortie de la chambre de gavage pour permettre le remplissage en pâte, provenant de la chambre de gavage, de la chambre de dosage.

D'autre part, un tel coulisseau porte généralement une surface d'obturation susceptible d'obturer totalement ou partiellement l'ouverture de sortie de ladite chambre de gavage, lorsque l'ouverture d'entrée/sortie de ladite chambre de dosage n'est plus sensiblement en vis-à-vis de l'ouverture de sortie de ladite chambre de gavage.

Plus particulièrement, l'aspiration de la pâte dans la chambre de gavage est réalisée lors du recul du piston dans ladite chambre, ce qui a pour effet d'augmenter le volume de cette dernière et de créer une dépression générant une aspiration de ladite pâte dans ladite chambre. En outre, lors du transfert de la pâte depuis la chambre de gavage vers la chambre de dosage, grâce au piston gaveur qui avance dans ladite chambre de gavage, ledit piston gaveur déplace et comprime la pâte vers le piston doseur repoussant ce dernier qui recule alors jusqu'à une position arrière au contact d'une butée. Cette butée est généralement prévue pour être réglable afin de limiter la course du piston doseur et modifier ainsi le volume de la chambre de dosage et, partant, la taille des pâtons ainsi réalisés.

Par ailleurs, une telle diviseuse comprend également un système d'actionnement du piston gaveur, du piston doseur, du couteau coulissant et de chaque chambre de dosage via le coulisseau, situé dans son ensemble sous le tapis d'évacuation. Le système d'actionnement comprend notamment un actionneur unique tel qu'une motorisation qui entraîne un balancier, via un amortisseur, permettant d'assurer notamment le déplacement du piston gaveur et de la chambre de dosage via le coulisseau.

Un cycle de fonctionnement d'une telle diviseuse correspond donc à une succession d'étapes depuis celle précédent le début de l'aspiration de la pâte provenant de la trémie dans la chambre de gavage en vue de son remplissage, suivi du transfert de ladite pâte de la chambre de gavage vers la chambre de dosage en vue de son remplissage, jusqu'à l'étape finale d'éjection de la pâte contenu dans la chambre de dosage, sous la forme d'un pâton, sur un support d'évacuation.

En dehors de ce type de diviseuse à tiroirs munie d'une seule chambre de dosage, on connaît également des diviseuses à tiroirs munies d'au moins deux chambres de dosage permettant d'obtenir une cadence de production plus élevée et d'avoir un cycle machine réduit.

Toutefois, dans ces diviseuses à tiroirs, la pâte est malmenée depuis sa sortie de la trémie jusqu'à son transfert dans une ou plusieurs chambres de dosage, ce qui ne permet pas d'obtenir une bonne qualité de restitution de la pâte en pâtons ou un bon alignement de l'axe de déplacement du pâton dans la suite du processus de son traitement.

En effet, la pâte est transférée de la chambre de gavage vers la chambre de dosage dès la remontée de cette dernière, lorsque l'ouverture d'entrée/sortie de la chambre de dosage, durant ladite remontée, n'est encore que partiellement en vis à vis de l'ouverture de sortie de la chambre de gavage créant par la même un passage autorisant le transit de la pâte d'une chambre à l'autre, ce qui a pour effet, notamment lorsque ledit passage est réduit, de détériorer la qualité intrinsèque de la pâte transférée et de la déchirer.

En outre, la pâte subit également une déchirure de ses fibres lors de son aspiration dans la chambre de gavage, du fait notamment de temps d'aspiration trop courts.

De telles diviseuses à tiroirs pourraient répondre à ce problème de déchirure des fibres de la pâte, mais en réalisant des adaptations mécaniques de l'ensemble du système d'actionnement leur conférant un prix de revient très élevé.

En outre, la pression exercée sur la pâte dans la chambre de dosage sur le piston gaveur vers le piston doseur n'est pas maîtrisée, c'est-à-dire qu'elle provoque un ressuage de la pâte, c'est-à-dire que la matière liquide se sépare de la matière solide, ce qui a pour effet de rendre ladite pâte très collante en superficie et de rendre difficile son traitement pour la suite du processus.

Par ailleurs, le système d'actionnement de ces diviseuses demande une articulation mécanique autour de l'actionneur unique qui ne peut être positionnée que sous le tapis d'évacuation. Il en résulte que tous les déchets de la division, tels que l'huile et/ou autre(s) lubrifiant(s), et la pâte résiduelle, tombent sur les organes mécaniques du système d'actionnement et les détériorent. Par ailleurs, le nettoyage sporadique desdits organes a pour effet de corroder ces derniers du fait du sel contenu dans la pâte résiduelle et d'accentuer encore plus leur détérioration.

En outre, le système d'actionnement est situé à une faible hauteur par rapport au sol, généralement moins d'un mètre, ce qui rend difficile l'accès aux différents organes mécaniques pour en effectuer la maintenance.

Le document DE 39 11 521 A1 a pour objet une machine pour diviser la pâte comprenant une chambre de remplissage de pâte provenant d'une trémie et une chambre de dosage mobile en translation verticale et coopérant avec la chambre de remplissage. La chambre de remplissage renferme un piston de remplissage permettant de prélever la pâte dans la chambre de remplissage lors de l'ouverture d'un couvercle et de pousser la pâte dans la chambre de dosage lorsque celle-ci est en regard de la chambre de remplissage. La chambre de dosage contient un piston doseur permettant le dosage et l'éjection de la pâte hors de ladite chambre de dosage à un point d'éjection inférieur. Le document DE 39 11 521 A1 divulgue également un procédé de division volumétrique selon le préambule de la revendication 1.

Le document DE 49 562 A1 D2 a pour objet un dispositif de division de la pâte du type comprenant une trémie contenant la pâte et surmontant une chambre principale dans laquelle est monté un piston principal, un chariot apte à être déplacé en translation vertical et étant traversé par une chambre secondaire dans laquelle est monté un piston se déplaçant transversalement au mouvement dudit chariot de sorte à mettre la chambre secondaire en regard de la chambre principale pour transférer, grâce au piston principal, la pâte provenant de la trémie et chargée dans cette dernière dans la chambre secondaire.

Toutefois les systèmes décrits dans ces deux documents DE 39 11 521 A1 et DE 49 562 A1 D2 ne permettent pas d'obtenir une qualité de la pâte suffisante, compte tenu de déchirements de cette dernière apparaissant notamment lors du transfert de la pâte entre la trémie et la chambre de remplissage ou principale.

Le document WO 96/32845 concerne un diviseur de pâte comprenant un bâti disposé de façon adjacente à un bol de mélange d'un mélangeur de pâte, un corps de diviseur sur le bâti s'étendant dans le bol de mélange et ayant une face courbe pouvant être engagée avec la pâte dans le bol de mélange, un manchon alternatif monté dans un premier cylindre et un deuxième cylindre dans le corps diviseur relié à la face courbe. Le premier cylindre est monté de manière articulée sur le bâti pour permettre son déplacement entre une première position et une deuxième position. Un premier piston alternatif est monté dans le manchon et un deuxième piston alternatif est monté dans le deuxième cylindre de telle sorte que le premier cylindre et/ou le manchon reçoivent, dans la première position du premier cylindre, une charge de pâte provenant de la face courbe lorsque le bol de mélange tourne. L'alignement du premier cylindre et du deuxième cylindre permet de transférer une quantité de pâte du premier cylindre dans le deuxième cylindre dont le deuxième piston permet l'éjection de ladite quantité de pâte sur un plateau de soulèvement.

Cependant dans un tel diviseur du type décrit dans ce document WO 96/32845 la pâte subi un traitement contraignant avec des déchirements qui ne permettent pas d'obtenir une bonne qualité de la pâte.

Le document FR 2 902 293 A1 a pour objet un procédé de division volumétrique de pâte contenue dans une trémie consistant essentiellement à laisser s'écouler la pâte par gravitation dans une chambre de gavage, refermer au moins partiellement ladite chambre, procéder à la division volumétrique en pâtons de la quantité de pâte contenue dans ladite chambre, retourner cette dernière et déverser lesdits pâtons sur un support.

Toutefois, si la solution de l'écoulement par gravité de la pâte depuis la trémie jusque dans la chambre de gavage permet d'améliorer la qualité de la pâte, moins contrainte que dans les procédés antérieurs par aspiration, elle présente l'inconvénient de devoir maintenir un niveau constant de la pâte dans la trémie afin de ne pas avoir des variations de poids importantes sur le produit final, c'est-à-dire sur chaque pâton obtenu, contrairement à la solution par aspiration qui permet de limiter ces variations. En outre, la solution par gravité exige une addition de lubrifiant tel que de l'huile alimentaire dans la pâte permettant de réduire le frottement de la pâte contre les parois internes de la trémie qui descend vers la chambre de gavage par la seule force de la gravité. L'aspiration permet de limiter fortement la quantité d'huile utilisée à cette fin.

La présente invention a pour but de pallier ces inconvénients en proposant un procédé de division volumétrique de pâte en pâtons permettant d'améliorer la qualité du produit final en supprimant les problèmes de déchirures de la fibre de la pâte créés par les diviseuses actuelles, tout en limitant le ressuage de ladite pâte, la quantité d'huile de lubrification et les variations de poids sur le produit final.

A cet effet, la présente invention a pour but de pallier à ces inconvénients en proposant un procédé de division volumétrique de la pâte mis en oeuvre par une diviseuse comprenant une trémie contenant de la pâte et au moins un ensemble comprenant une chambre de gavage surmontée par ladite trémie et comportant une ouverture d'entrée et une ouverture de sortie de la pâte, ladite trémie débouchant à sa partie basse, par ladite ouverture d'entrée, dans ladite chambre de gavage, au moins une chambre de dosage comportant une ouverture d'entrée/sortie de la pâte et étant apte à être déplacée depuis un point de transfert et de remplissage de pâte provenant de la chambre de gavage, où l'ouverture de sortie de ladite chambre de gavage est en vis-à-vis de l'ouverture d'entrée/sortie de ladite chambre de dosage, jusqu'à un point d'éjection de la pâte, sous la forme d'un pâton, sur un support d'évacuation, un organe d'aspiration et de poussée de la pâte dans ladite chambre de gavage, un organe de coupe et d'obturation apte à découper la pâte en sortie de trémie et à obturer l'ouverture d'entrée de la pâte dans ladite chambre de gavage, un organe de dosage et d'éjection de la pâte sous la forme d'un pâton hors de la chambre de dosage et une surface d'obturation de l'ouverture de sortie de ladite chambre de gavage, chaque chambre de dosage, chaque organe d'aspiration et de poussée, chaque organe de dosage et d'éjection, éventuellement chaque organe de coupe et d'obturation, étant actionné par un moyen d'actionnement propre respectif, et lesdits moyens d'actionnement propres étant aptes à être commandés et actionnés indépendamment l'un de l'autre par une unité centrale de pilotage informatique, ledit procédé consistant, pour un cycle de fonctionnement, à piloter individuellement chaque chambre de dosage, chaque organe d'aspiration et de poussée, chaque organe de dosage et d'éjection, éventuellement chaque organe de coupe et d'obturation, par l'intermédiaire du moyen d'actionnement propre respectif, pour permettre l'engagement du transfert de la pâte, provenant de la chambre de gavage, dans chaque chambre de dosage correspondante, ce uniquement lorsque l'orifice d'entrée/sortie de chaque chambre de dosage est positionné en regard ou sensiblement en regard de l'orifice de sortie de ladite chambre de gavage et le pilotage individuel de chaque moyen d'actionnement propre respectif étant prévu pour contrôler en outre, d'une part, la compression de la pâte dans chaque chambre de dosage et, caratérisé en ce que ledit pilotage individuel de chaque moyen d'actionnement est prévu pour contrôler d'autre part, le temps d'aspiration de la pâte, provenant de la trémie, dans la chambre de gavage de manière à définir un temps d'aspiration de la pâte sur un cycle de fonctionnement suffisamment long pour éviter toute déchirure de ladite pâte lors de son passage de la trémie dans la chambre de gavage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

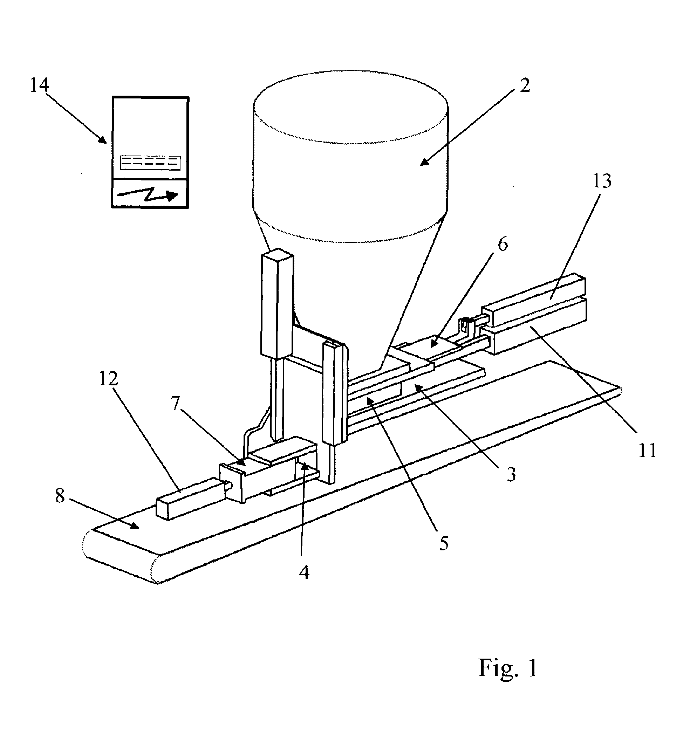

- la figure 1 est une vue en perspective d'une diviseuse mise en oeuvre par le procédé selon la présente invention dans un mode de réalisation préférentiel,

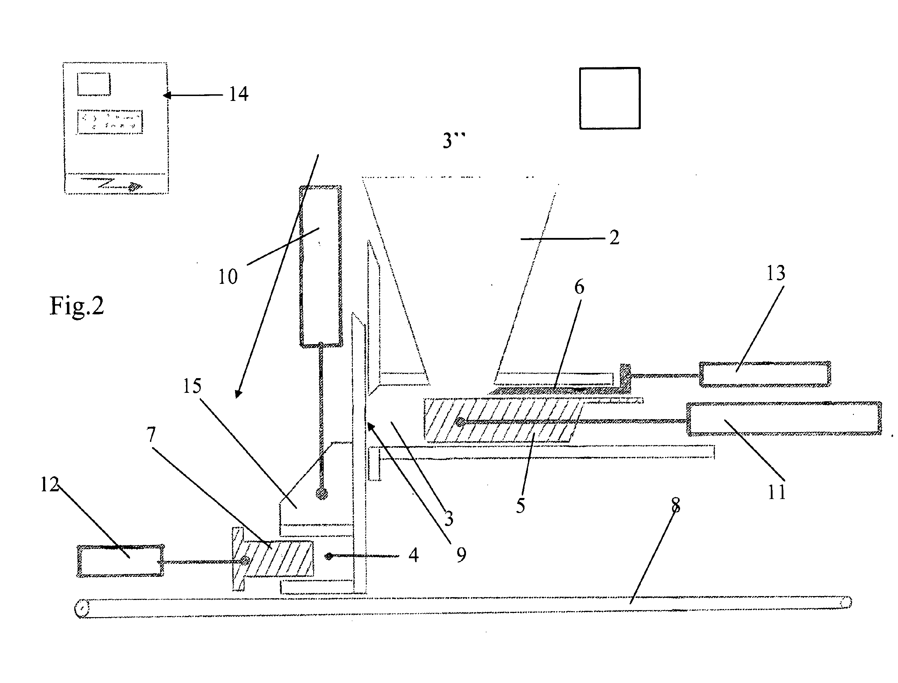

- la figure 2 est une vue de profil de la diviseuse représentée sur la figure 1,
- la figure 3a est une vue de profil schématique de la diviseuse représentée sur la figure 1 en situation de fonctionnement correspondant à l'étape initiale du cycle de production,
- la figure 3b est une vue de profil schématique de la diviseuse représentée sur la figure 1 en situation de fonctionnement correspondant au début de l'aspiration de la pâte dans la chambre de gavage,
- la figure 3c est une vue de profil schématique de la diviseuse représentée sur la figure 1 en situation de fonctionnement correspondant à la fermeture du passage de la pâte entre la trémie et la chambre de gavage,
- la figure 3d est une vue de profil schématique de la diviseuse représentée sur la figure 1 en situation de fonctionnement correspondant à la fin de l'aspiration de la pâte dans la chambre de gavage avec la fermeture au moyen du couteau coulissant du passage de la pâte entre la trémie et la chambre de gavage,
- la figure 3e est une vue de profil schématique de la diviseuse représentée sur la figure 1 en situation de fonctionnement correspondant à l'étape précédent immédiatement le début du remplissage en pâte de la chambre de dosage,
- la figure 3f est une vue de profil schématique d'une diviseuse de l'art antérieur en situation de fonctionnement correspondant au début du remplissage de la chambre de dosage,
- la figure 3g montre la diviseuse de l'art antérieur représentée sur la figure 3f en situation de fonctionnement, en cours de remplissage de la chambre de dosage,
- la figure 3h est une vue de profil schématique de la diviseuse représentée sur la figure 1 en situation de fonctionnement, en cours de remplissage de la chambre de dosage,
- la figure 3i est une vue de profil schématique de la diviseuse représentée sur la figure 1 en situation de fonctionnement, en cours de descente du coulisseau permettant d'amener la chambre de dosage vers le point d'éjection de la pâte dosée sur un tapis d'évacuation,
- la figure 3j est une vue de profil schématique de la diviseuse représentée sur la figure 1 en situation de fonctionnement, en cours d'éjection d'un pâton de la chambre de dosage sur un tapis d'évacuation,
- la figure 4 est une vue de profil schématique d'une diviseuse de l'art antérieur avec le système d'actionnement s'étendant sous le tapis d'évacuation.
- la figure 5 montre un tableau comparatif des temps d'aspiration à différente cadences et selon la durée d'un cycle de fabrication d'un pâton respectivement d'une diviseuse selon la présente invention et d'une diviseuse classique.
- la figure 6 montre deux courbes des temps d'aspiration à différentes cadences respectivement d'une diviseuse selon la présente invention et d'une diviseuse classique.

Les figures montrent une diviseuse volumétrique de pâte 1 en pâtons 1' convenant à la mise en oeuvre du procédé selon la présente invention, pour la réalisation de produits de boulangerie ou analogue, comprenant une trémie 2 contenant de la pâte 1 et au moins un ensemble comprenant une chambre de gavage 3 surmontée par ladite trémie 2 et comportant une ouverture d'entrée 3' et une ouverture de sortie 3" de la pâte, ladite trémie 2 débouchant à sa partie basse, par ladite ouverture d'entrée 3', dans ladite chambre de gavage 3, au moins une chambre de dosage 4 comportant une ouverture d'entrée/sortie 4' de la pâte 1 et étant apte à être déplacée depuis un point de transfert et de remplissage de pâte 1, où l'ouverture de sortie 3" de ladite chambre de gavage 3 est en vis-à-vis de l'ouverture d'entrée/sortie 4' de ladite chambre de dosage 4 jusqu'à un point d'éjection de la pâte 1, sous la forme d'un pâton l', sur un support d'évacuation 8, de préférence un tapis d'évacuation, un organe d'aspiration et de poussée 5 de la pâte dans ladite chambre de gavage 3, un organe de coupe et d'obturation 6 apte à découper la pâte en sortie de trémie 2 et à obturer l'ouverture d'entrée 3' de la pâte 1 dans la chambre de gavage 3, un organe de dosage et d'éjection 7 de la pâte 1 hors de la chambre de dosage 4 et une surface d'obturation 9 de l'ouverture de sortie 3" de ladite chambre de gavage 3.

De manière connue, chaque chambre de dosage 4, chaque organe d'aspiration et de poussée 5 de la pâte 1 dans la chambre de gavage 3 correspondante et chaque organe de dosage et d'éjection 7 de la pâte dans la chambre de dosage 4 correspondante, éventuellement chaque organe de coupe et d'obturation 6, est actionné par un moyen d'actionnement propre respectif 10, 11, 12 et 13, lesdits moyens d'actionnement propres étant aptes à être commandés et actionnés chacun, indépendamment l'un de l'autre, par une unité centrale de pilotage informatique 14 tel que, par exemple, un automate programmable.

On peut voir également sur les figures que, de manière connue, la pâte 1 qui est introduite dans la trémie 2 provient d'un pétrin, non représenté, en étant acheminée au moyen d'un tapis d'amenée 1".

Dans un mode de réalisation particulier de la présente invention, non représenté, chaque organe d'aspiration et de poussée 5 de la pâte 1 dans la chambre de gavage 3 correspondante et chaque organe de coupe et d'obturation 6 peuvent être actionnés ensemble par un moyen d'actionnement propre. Toutefois, dans un mode de réalisation préférentiel de la présente invention, représenté sur les figures, chaque organe de coupe et d'obturation 6 peut être actionné par un moyen d'actionnement propre 13 et chaque organe d'aspiration et de poussée 5 de la pâte 1 dans la chambre de gavage 3 correspondante peut être actionné par un moyen d'actionnement propre 11.

De préférence chaque moyen d'actionnement 10, 11, 12 et 13 propre peut consister en un vérin hydraulique, électrique ou pneumatique, en un moteur linéaire, en un système linéaire couplant un moteur rotatif à une vis à bille, à une crémaillère ou à une courroie.

Dans un mode de réalisation préférentiel des moyens d'actionnement propres 10, 11, 12 et 13, chaque moyen d'actionnement propre 11 de chaque organe d'aspiration et de poussée 5 de la pâte 1 dans la chambre de gavage 3 correspondante peut avantageusement consister en un moteur linaire 11, ce pour répondre aux accélérations élevées dudit organe d'aspiration et de poussée 5 qui sont nécessaires pour obtenir une bonne cinématique du fonctionnement de la diviseuse, et les moyens d'actionnement propre respectifs 10, 12 et 13 de chaque chambre de dosage 4, chaque organe de dosage et d'éjection 7et, le cas échéant, de chaque organe de coupe et d'obturation 6, peut consister en un système linéaire couplant un moteur rotatif à une vis à bille ou à une crémaillère.

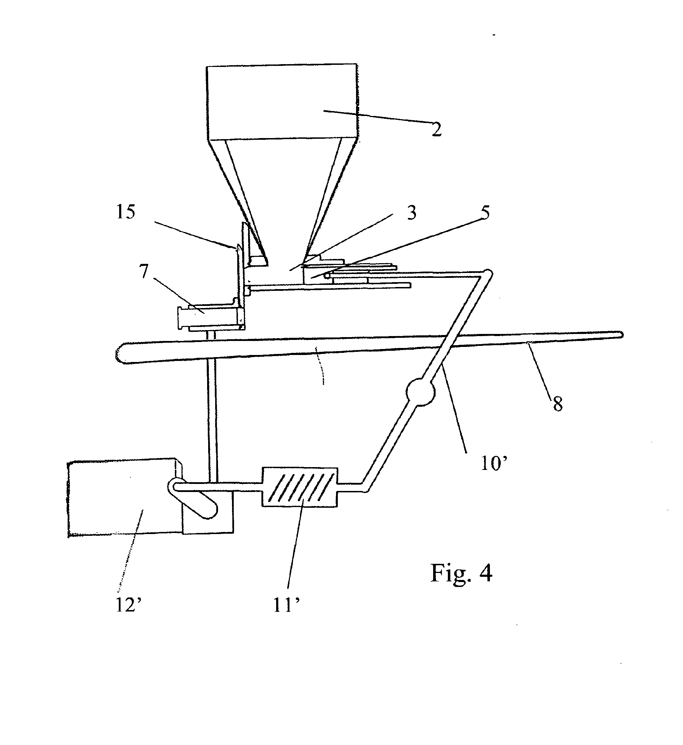

De préférence, les moyens d'actionnement propre 10, 11, 12 et 13 occupent chacun un espace fonctionnel s'étendant sensiblement à un niveau supérieur ou sensiblement égal à celui correspondant au support d'évacuation 8 des pâtons l' éjectés hors de chaque chambre de dosage 4, ce de manière à éviter que de l'huile et/ou de la pâte résiduelle tombent sur lesdits moyens d'actionnement et les détériorent. Ceci contrairement aux diviseuses où l'espace fonctionnel, comprenant des moyens d'actionnement 10', 11', 12' reliés mécaniquement entre eux, s'étend, comme on peut le voir sur la figure 4, sous le support d'évacuation 8.

Toujours dans un mode de réalisation préférentiel de la présente invention, chaque organe d'aspiration et de poussée 5 de la pâte 1 dans la chambre de gavage 3 correspondante peut avantageusement consister en un piston gaveur, chaque organe de coupe et d'obturation 6 peut avantageusement consister en un couteau coulissant et chaque organe de dosage et d'éjection 7 peut consister en un piston doseur.

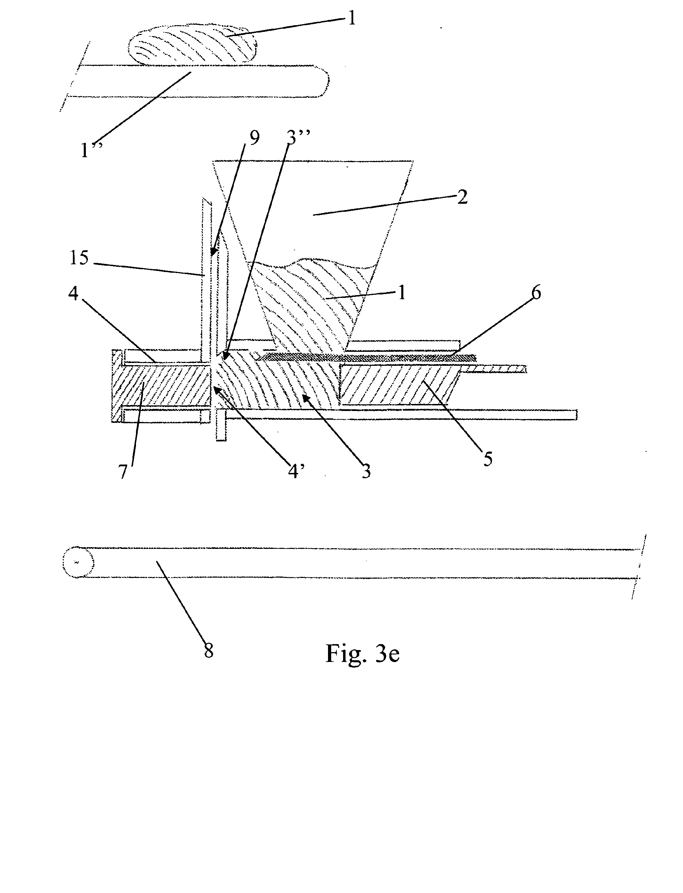

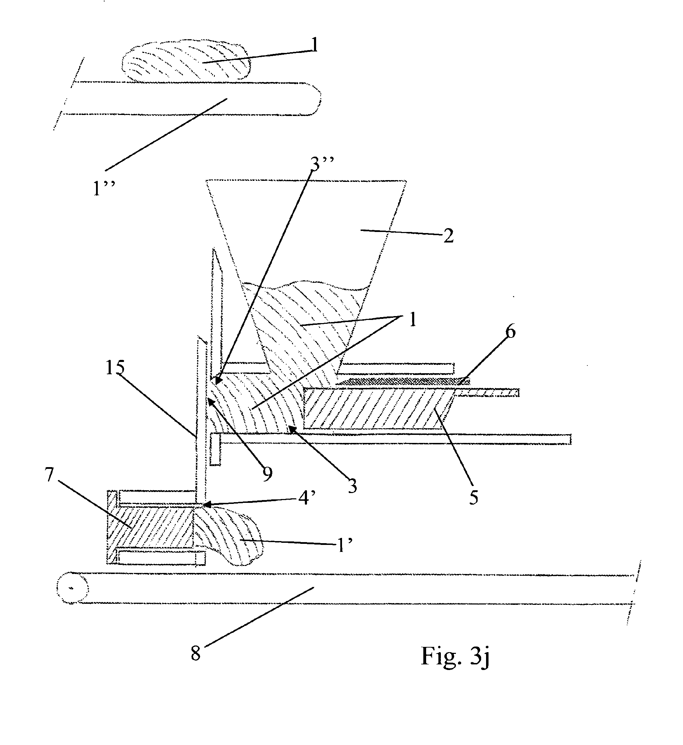

Par ailleurs, chaque chambre de dosage 4 peut être solidaire d'un coulisseau 15 permettant de guider son déplacement, préférentiellement dans un mouvement de montée/descente, depuis son point d'éjection (figure 3j) jusqu'à son point de transfert et de remplissage (figure 3e) et réciproquement.

On comprendra alors que dans le cas préférentiel d'un déplacement de chaque chambre de dosage 4 en montée/descente, et plus particulièrement selon une course linéaire dans un plan sensiblement vertical, le point de transfert et de remplissage de chaque chambre de dosage 4 correspondra à son point de course haut, tandis que le point d'éjection de chaque chambre de dosage correspondra à son point de course bas.

De préférence, la surface d'obturation 9 de l'ouverture de sortie 3" de la chambre de gavage 3 peut être solidaire du coulisseau 15, laquelle surface d'obturation 9 s'étend de préférence dans un plan sensiblement vertical et sensiblement perpendiculaire à l'axe de l'ouverture de sortie 3" de la chambre de gavage 3. Ceci de manière à permettre l'obturation totale ou partielle de ladite ouverture de sortie 3" lorsque l'ouverture d'entrée/sortie 4' de chaque chambre de dosage 4 correspondante n'est pas située sensiblement en vis-à-vis de l'ouverture de sortie 3" de la chambre de gavage 3.

Ainsi, grâce aux moyens d'actionnement propre 10, 11, 12 et 13 de la diviseuse selon la présente invention qui sont aptes à être commandés et actionnés chacun, indépendamment l'un de l'autre, il est possible de dissocier notamment la partie mécanique et cinématique de la chambre de dosage 4 de celle de la chambre de gavage 3 de sorte à permettre le remplissage en pâte 1 de la chambre de dosage 4 en provenance de la chambre de gavage 3 uniquement lorsque l'ouverture d'entrée/sortie 4' de la chambre de dosage 4 est située en regard, ou sensiblement en regard, de l'ouverture de sortie 3" de la chambre de gavage 3 (figure 3e). On comprendra alors que le remplissage de la chambre de dosage 4 est effectué, de préférence, en maintenant cette dernière dans une position fixe, c'est-à-dire sans déplacement de chaque chambre de dosage 4, ou quasiment fixe.

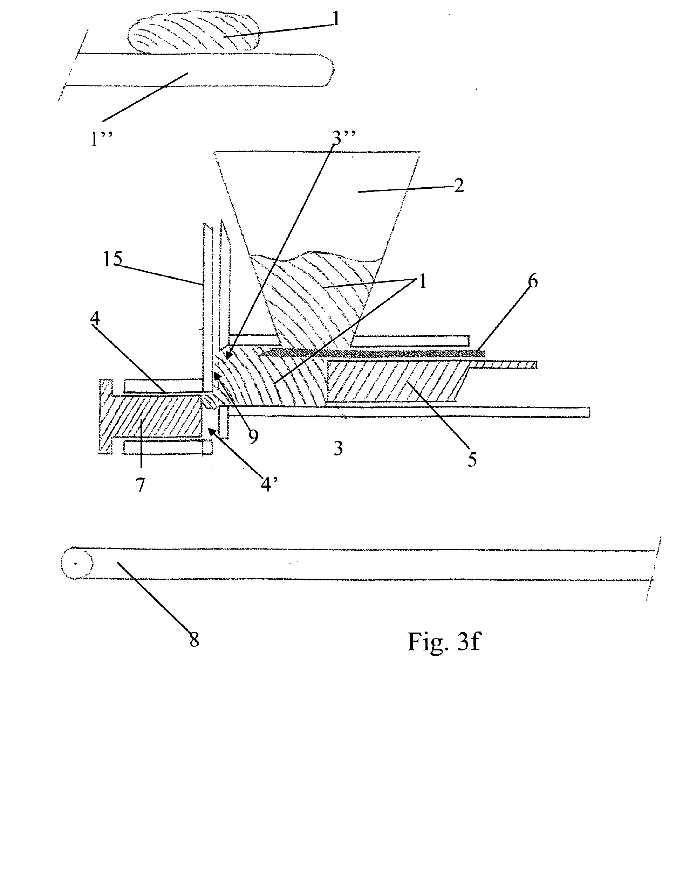

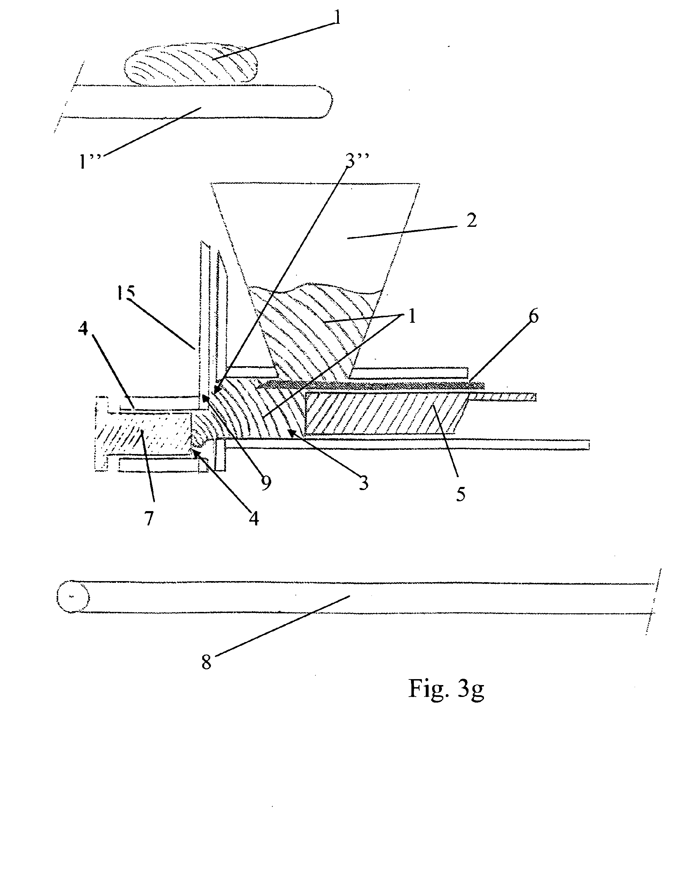

La pâte 1, dans une diviseuse selon convenant à la mise en oeuvre du procédé, la présente invention, peut ainsi être transférée depuis la chambre de gavage 3 jusque dans la chambre de dosage 4 sans subir de déformation contrariée et de déchirement des fibres de la pâte, préservant ainsi sa qualité. En effet, dans des diviseuses de l'art antérieur, le transfert de pâte 1 depuis la chambre de gavage 3 jusque dans la chambre de dosage 4 est effectué au cours du déplacement de la chambre de dosage 4, c'est-à-dire lors de la remontée de cette dernière, et dès que l'ouverture d'entrée/sortie 4' se trouve partiellement en regard de l'ouverture de sortie 3" de la chambre de gavage 3. Un passage entre la chambre de gavage 3 et la chambre de dosage 4 est alors créé par le recouvrement partiel desdites ouvertures, autorisant le transit de la pâte 1 d'une chambre à l'autre, mais ce qui a pour effet, comme on peut le voir sur la figure 3f et sur la figure 3g, de déformer de façon contrariée la pâte et de déchirer ses fibres du fait notamment de la dimension réduite dudit passage et de la chicane provoquée par le recouvrement partiel desdites ouvertures, notamment au début dudit recouvrement.

En outre, la possibilité conférée une telle diviseuse convenant à la mise en oeuvre du procédé selon la présente invention de pouvoir piloter individuellement le moyen d'actionnement 12 de l'organe de dosage et d'éjection 7 de chaque chambre de dosage 4 et le moyen d'actionnement 11 de l'organe de d'aspiration et de poussée 5 de chaque chambre de gavage 3, indépendamment l'un de l'autre, permet de contrôler avantageusement la compression de la pâte 1 dans la chambre de dosage 4, notamment lors du remplissage en pâte 1 de cette dernière, contrairement aux diviseuses classiques, ceci afin de limiter ou réduire le ressuage de la pâte 1.

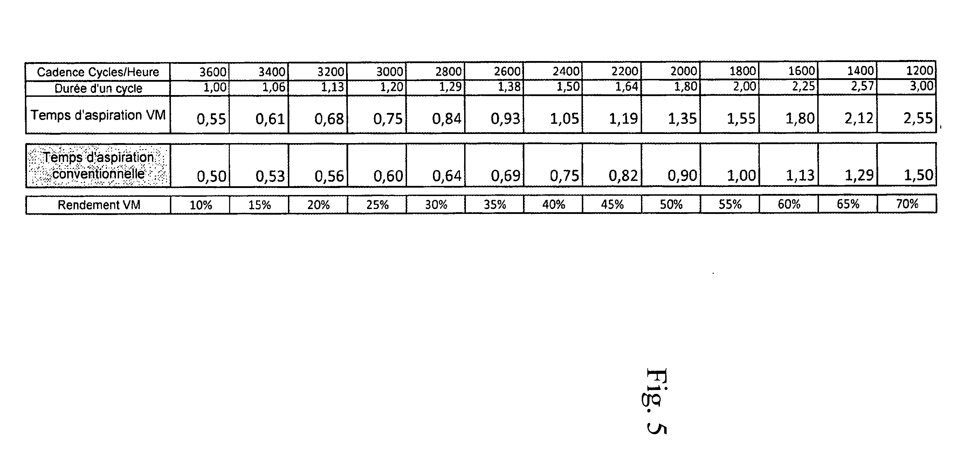

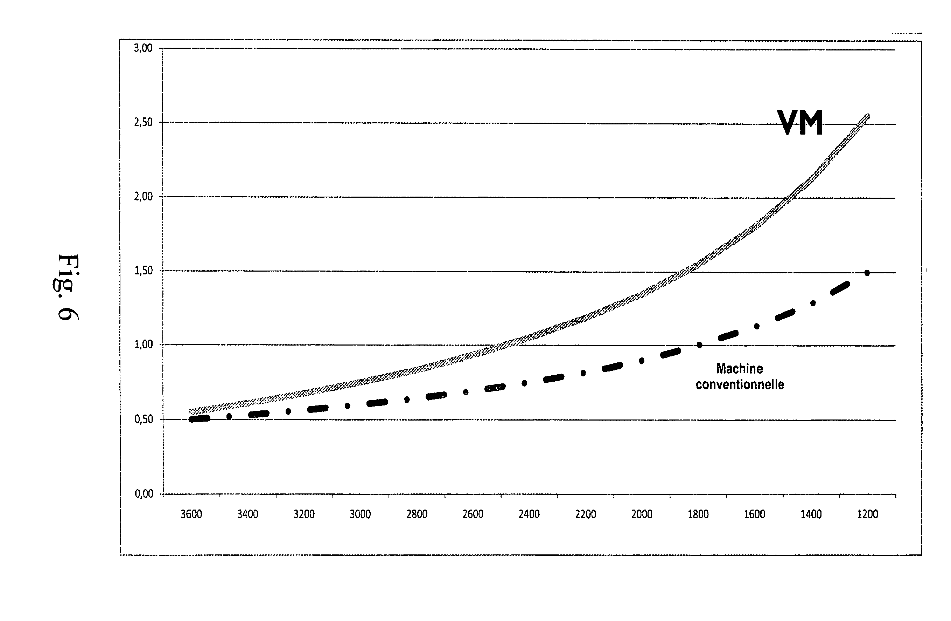

Une telle possibilité offerte par une telle diviseuse convenant à la mise en oeuvre du procédé selon la présente invention, de pouvoir piloter individuellement, par l'intermédiaire de leurs moyens d'actionnement respectifs 10, 11, 12 et 13, chaque chambre de dosage 4, chaque organe d'aspiration et de poussée 5 de la pâte 1, chaque organe de dosage et d'éjection 7 et, le cas échéant, chaque organe de coupe et d'obturation 6, permet en outre d'obtenir un temps d'aspiration de la pâte 1 dans la chambre de gavage 3 supérieur à celui obtenu avec les diviseuses actuelles, comme on peut le voir sur la figure 5 et sur la figure 6, dans des calculs identiques.

On notera que l'ensemble des pièces, constituant une telle diviseuse convenant à la mise en oeuvre du procédé selon la présente invention, qui sont en contact avec un produit alimentaire répondent de préférence aux règles alimentaires de sécurité et d'hygiène. A ce titre, elles peuvent par exemple être réalisées à partir d'un acier inoxydable.

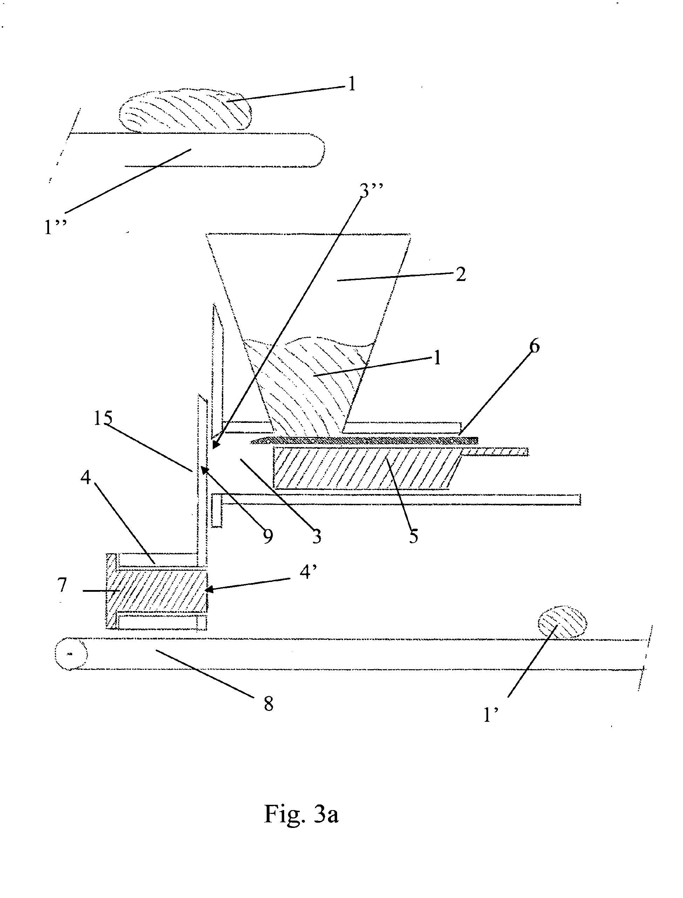

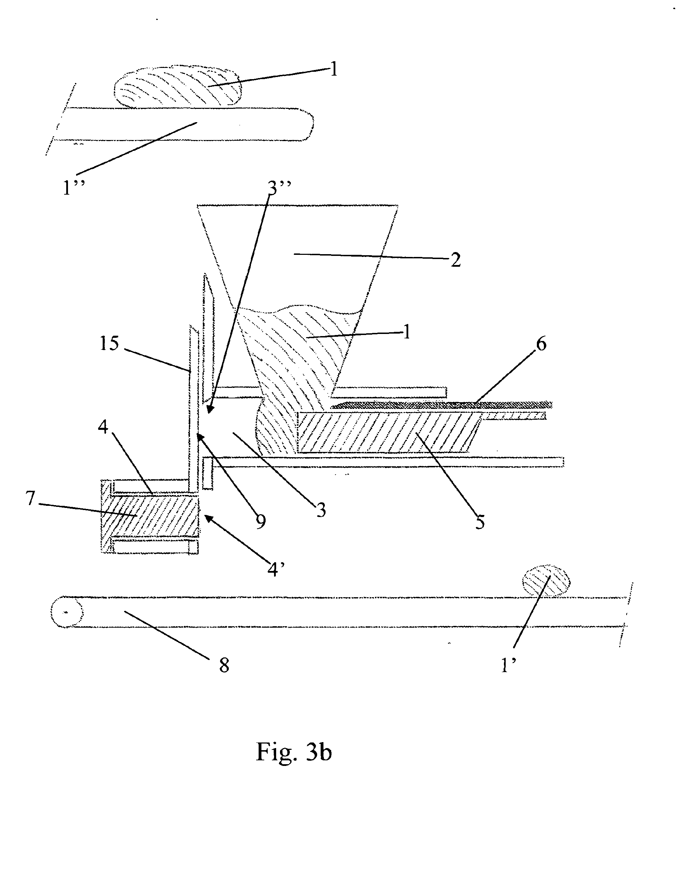

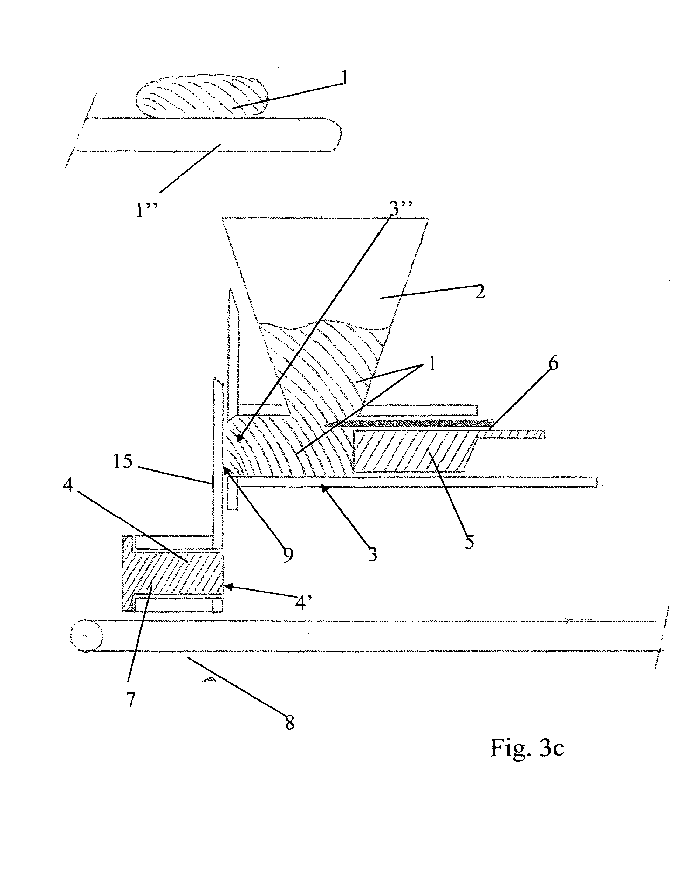

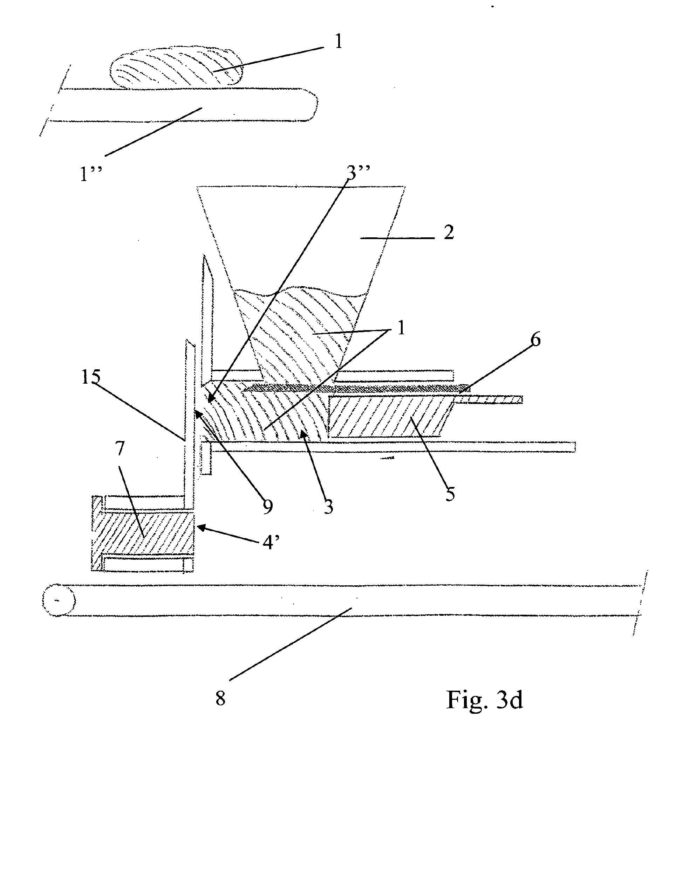

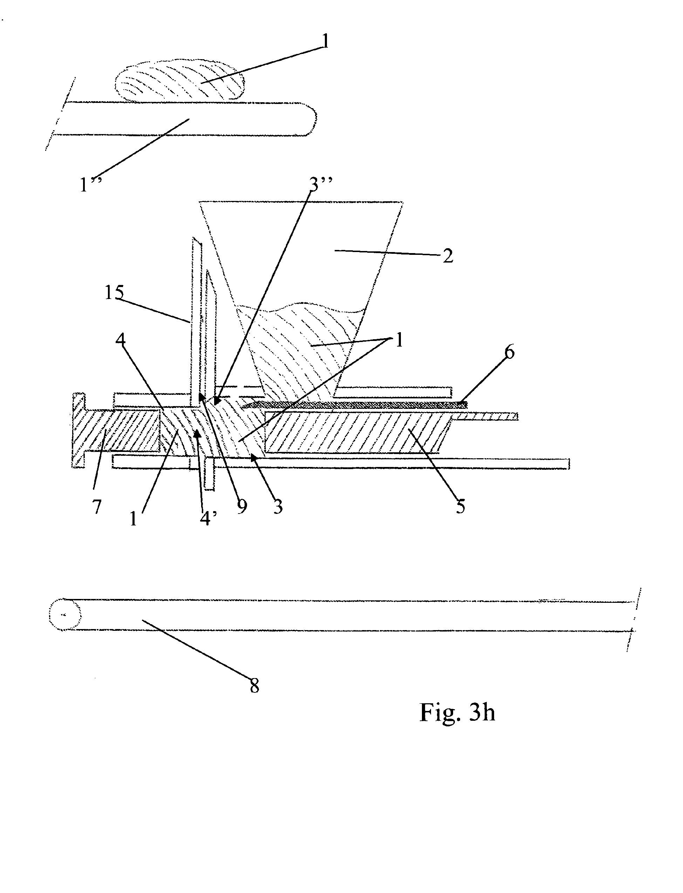

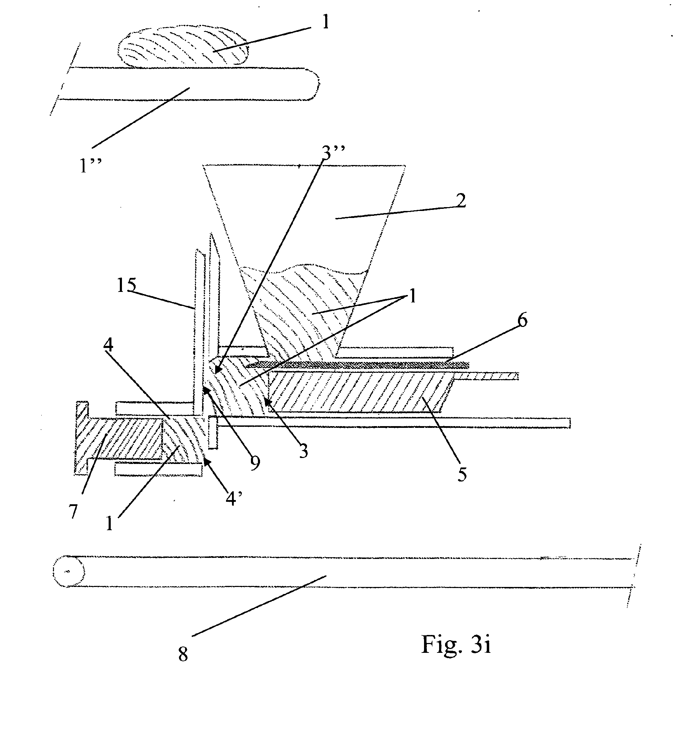

Si on se réfère maintenant aux figures 3a, 3b, 3c, 3d, 3e, 3h, 3i, 3j on peut voir que le procédé de division volumétrique selon la présente invention mis en oeuvre par une telle diviseuse consiste à piloter individuellement chaque chambre de dosage 4, chaque organe d'aspiration et de poussée 5, chaque organe de dosage et d'éjection 7, éventuellement chaque organe de coupe et d'obturation 6, par l'intermédiaire d'un moyen d'actionnement propre respectif 10, 11, 12 et 13, de sorte à permettre l'engagement du transfert de la pâte 1, provenant de la chambre de gavage 3, dans chaque chambre de dosage 4 correspondante, ce uniquement lorsque l'orifice d'entrée/sortie 4' de chaque chambre de dosage 4 est positionné en regard ou sensiblement en regard de l'orifice de sortie 3" de ladite chambre de gavage 3.

En outre, le pilotage individuel de chaque moyen d'actionnement propre respectif 10, 11, 12 et 13 du procédé selon la présente invention est prévu pour contrôler la compression de la pâte 1 dans la chambre de dosage, ce pour limiter ou réduire le ressuage de la pâte 1. Un tel pilotage est prévu également pour contrôler le temps d'aspiration de la pâte 1 provenant de la trémie 2 dans la chambre de gavage 3 de manière à définir un temps d'aspiration de la pâte 1 sur un cycle de fonctionnement suffisamment long pour éviter toute déchirure des fibres de la pâte 1 lors de son passage de la trémie 2 à la chambre de gavage 3. C'est ainsi, comme on peut le voir sur la figure 5 et sur la figure 6, que le procédé selon la présente invention permet d'obtenir un temps d'aspiration, sur un cycle de fonctionnement d'une durée donnée, supérieur à celui obtenu avec une diviseuse classique, et procurant alors une meilleure qualité de la pâte 1 remplissant la chambre de gavage 3.

Dans un mode de réalisation préférentiel des étapes du procédé selon la présente invention, pour un cycle de fonctionnement, celui-ci peut consister, pour un cycle de fonctionnement, à partir de l'étape initiale où la trémie 2 contient de la pâte 1 à diviser en pâtons 1', où l'ouverture d'entrée 3' de la chambre de gavage 3 est obturée et où chaque chambre de dosage 4 est positionnée au point d'éjection, dans les étapes successives suivantes :
- à commander l'organe de coupe et d'obturation 6 et l'organe d'aspiration et de poussée 5 de sorte à aspirer la pâte 1 de la trémie 2 dans la chambre de gavage 3, par un effet essentiellement de dépression dans cette dernière, jusqu'à son remplissage complet en pâte 1 (figure 3b), puis
- une fois le remplissage en pâte 1 de la chambre de gavage 3 terminé, à commander l'organe d'aspiration et de poussée 5, préférentiellement à commander le maintien du piston gaveur en fin de course d'aspiration, et, le cas échéant, à commander l'organe de coupe et d'obturation 6 (figure 3c), préférentiellement à commander l'avance du couteau coulissant, de sorte à obturer l'ouverture d'entrée 3' de cette dernière et partant celle de la partie basse de la trémie 2, puis

- une fois réalisée l'obturation complète de l'ouverture d'entrée 3' dans la chambre de gavage 3, à commander le déplacement de chaque chambre de dosage 4 depuis son point d'éjection jusqu'à son point de transfert et de remplissage et à commander l'organe de dosage et d'éjection 7, préférentiellement à commander l'avance du piston doseur, de chaque chambre de dosage 4 de sorte à fermer l'ouverture d'entrée/sortie 4' de chacune desdites chambres de dosage 4 pour éviter tout transfert de pâte de la chambre de gavage 3 dans chaque chambre de dosage 4 durant son déplacement et lorsque l'ouverture d'entrée/sortie 4' de chaque chambre de dosage 4 est partiellement en vis-à-vis de l'ouverture de sortie 3" de la chambre de gavage 3 (figure 3d), puis
- une fois l'ouverture d'entrée/sortie 4' de chaque chambre de dosage 4 totalement en vis-à-vis de l'ouverture de sortie 3" de la chambre de gavage 3, ce qui correspond au point de transfert et de remplissage de chaque chambre de dosage 4, à commander l'organe de dosage et d'éjection 7 de chaque chambre de dosage 4, préférentiellement à commander le recul du piston doseur, tout en commandant l'organe d'aspiration et de poussée 5, par exemple l'avance du piston gaveur formant ledit organe d'aspiration et de poussée, de ladite chambre de gavage 3 de sorte à effectuer le transfert de la pâte 1 de cette dernière dans la ou les chambres de dosage 4 correspondantes (figure 3e et figure 3h), puis
- une fois que chaque chambre de dosage 4 est remplie d'une quantité de pâte 1 désirée, à commander le déplacement de chaque chambre de dosage 4 depuis son point de transfert et de remplissage jusqu'à son point d'éjection, tout en commandant notamment l'organe d'aspiration et de poussée 5 de la chambre de gavage 3, de sorte à maintenir une pression maîtrisée sur la pâte 1, c'est-à-dire sans provoquer de ressuage de la pâte 1 (figure 3i),
- une fois le point d'éjection de chaque chambre de dosage 4 atteint, à commander l'organe de dosage et d'éjection 7 de chaque chambre de dosage 4 de sorte à éjecter hors de chaque chambre de dosage 4 la pâte 1 sous la forme d'un pâton l' sur un support d'évacuation 8, ce tout en commandant l'organe d'aspiration et de poussée 5 de la chambre de gavage 3 et, le cas échéant, l'organe de coupe et d'obturation 6, de sorte à engager l'aspiration de la pâte 1 de la trémie 2 dans la chambre de gavage 3 en vue de son remplissage.

De préférence dans le procédé selon la présente invention, en fin d'aspiration de la pâte 1 dans la chambre de gavage 3, lorsque celle-ci est remplie, l'organe de coupe et d'obturation 6 peut être activé de sorte à obturer l'ouverture d'entrée 3' dans ladite chambre de gavage avant le début du déplacement de chaque chambre de dosage 4 depuis son point d'éjection jusqu'à son point de transfert et de remplissage (figure 3c).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de division volumétrique mis en oeuvre par une diviseuse comprenant une trémie (2) contenant de la pâte (1) et au moins un ensemble comprenant une chambre de gavage (3) surmontée par ladite trémie (2) et comportant une ouverture d'entrée (3') et une ouverture de sortie (3") de la pâte, ladite trémie (2) débouchant à sa partie basse, par ladite ouverture d'entrée (3'), dans ladite chambre de gavage (3), au moins une chambre de dosage (4) comportant une ouverture d'entrée/sortie (4') de la pâte (1) et étant apte à être déplacée depuis un point de transfert et de remplissage de pâte (1) provenant de la chambre de gavage (3), où l'ouverture de sortie (3") de ladite chambre de gavage (3) est en vis-à-vis de l'ouverture d'entrée/sortie (4') de ladite chambre de dosage (4), jusqu'à un point d'éjection de la pâte (1), sous la forme d'un pâton (1'), sur un support d'évacuation (8), un organe d'aspiration et de poussée (5) de la pâte dans ladite chambre de gavage (3), un organe de coupe et d'obturation (6) apte à découper la pâte en sortie de trémie (2) et à obturer l'ouverture d'entrée (3') de la pâte dans ladite chambre de gavage (3), un organe de dosage et d'éjection (7) de la pâte sous la forme d'un pâton (1') hors de la chambre de dosage (4) et une surface d'obturation (9) de l'ouverture de sortie (3") de ladite chambre de gavage (3), chaque chambre de dosage (4), chaque organe d'aspiration et de poussée (5), chaque organe de dosage et d'éjection (7), éventuellement chaque organe de coupe et d'obturation (6), étant actionné par un moyen d'actionnement propre respectif (10, 11, 12, 13), et lesdits moyens d'actionnement propres étant aptes à être commandés et actionnés indépendamment l'un de l'autre par une unité centrale de pilotage informatique (14),
procédé consistant, pour un cycle de fonctionnement, à piloter individuellement chaque chambre de dosage (4), chaque organe d'aspiration et de poussée (5), chaque organe de dosage et d'éjection (7), éventuellement chaque organe de coupe et d'obturation (6), par l'intermédiaire du moyen d'actionnement propre respectif (10, 11, 12, 13), pour permettre l'engagement du transfert de la pâte (1), provenant de la chambre de gavage (3), dans chaque chambre de dosage (4) correspondante, ce uniquement lorsque l'orifice d'entrée/sortie (4') de chaque chambre de dosage (4) est positionné en regard ou sensiblement en regard de l'orifice de sortie (3") de ladite chambre de gavage (3), le pilotage individuel de chaque moyen d'actionnement propre respectif (10, 11, 12, 13) étant prévu pour contrôler en outre, d'une part, la compression de la pâte dans chaque chambre de dosage (4) et, **caractérisé en ce que** ledit pilotage individuel de chaque moyen d'actionnement est prévu pour contrôler d'autre part, le temps d'aspiration de la pâte (1), provenant de la trémie (2), dans la chambre de gavage (3) de manière à définir un temps d'aspiration de la pâte (1) supérieur sur un cycle de fonctionnement d'une durée donnée pour éviter toute déchirure de ladite pâte (1) lors de son passage de la trémie (2) dans la chambre de gavage (3).

2. Procédé, selon la revendication 1, **caractérisé en ce qu'**il consiste, pour un cycle de fonctionnement, à partir de l'étape initiale où la trémie (2) contient de la pâte (1) à diviser en pâtons (1'), où l'ouverture d'entrée (3') de la chambre de gavage (3) est obturée et où chaque chambre de dosage (4) est positionnée sensiblement au point d'éjection, dans les étapes successives suivantes :
- à commander l'organe de coupe et d'obturation (6) et l'organe d'aspiration et de poussée (5) de sorte à aspirer la pâte (1) de la trémie (2) dans la chambre de gavage (3), par un effet essentiellement de dépression dans cette dernière, jusqu'à son remplissage complet en pâte (1), puis
- une fois le remplissage en pâte de la chambre de gavage (3) terminé, à commander l'organe d'aspiration et de poussée (5) et, le cas échéant, à commander l'organe de coupe et d'obturation (6) de sorte à obturer l'ouverture d'entrée (3') de cette dernière et partant celle de la partie basse de la trémie (2), puis
- une fois réalisée l'obturation complète de l'ouverture d'entrée (3') dans la chambre de gavage (3), à commander le déplacement de chaque chambre de dosage (4) depuis son point d'éjection jusqu'à son point de transfert et de remplissage de pâte (1) et à commander l'organe de dosage et d'éjection (7) de chaque chambre de dosage (4) de sorte à fermer l'ouverture d'entrée/sortie (4') de chacune desdites chambres de dosage (4) pour éviter tout transfert de pâte (1) de la chambre de gavage (3) dans chaque chambre de dosage (4) durant son déplacement et lorsque l'ouverture d'entrée/sortie (4') de chaque chambre de dosage (4) est partiellement en vis-à-vis de l'ouverture de sortie (3") de la chambre de gavage (3), puis
- une fois l'ouverture d'entrée/sortie (4') de chaque chambre de dosage (4) sensiblement en vis-à-vis de l'ouverture de sortie (3") de la chambre de gavage (3), ce qui correspond au point de transfert et de remplissage de chaque chambre de dosage (4), à commander l'organe de dosage et d'éjection (7) de chaque chambre de dosage (4), tout en commandant l'organe d'aspiration et de poussée (5) de ladite chambre de gavage (3) de sorte à effectuer le transfert de la pâte (1) de cette dernière dans la ou les chambres de dosage (4) correspondantes, puis
- une fois que chaque chambre de dosage (4) est remplie d'une quantité de pâte (1) désirée, à commander le déplacement de chaque chambre de dosage (4) depuis son point de transfert et de remplissage jusqu'à son point d'éjection, tout en commandant l'organe d'aspiration et de poussée (5) de la chambre de gavage de sorte à maintenir une pression niaitrisèc sur la pâte (1),
- une fois le point d'éjection de chaque chambre de dosage (4) atteint, à commander l'organe de dosage et d'éjection (7) de chaque chambre de dosage (4) de sorte à éjecter hors de chaque chambre de dosage (4) le pâton (1') correspondant sur un support d'évacuation (8), ce tout en commandant l'organe d'aspiration et de poussée (5) de la chambre de gavage (3) et l'organe de coupe et d'obturation (6) de sorte à engager l'aspiration de la pâte (1) de la trémie (2) dans la chambre de gavage (3) en vue de son remplissage.

## Patentansprüche

1. Verfahren zur volumetrischen Aufteilung, das an einer Aufteilungsvorrichtung ausgeführt wird, die einen Vorratsbehälter (2), der Teig (1) enthält, und zumindest eine Einheit umfasst, die eine Füllkammer (3), über der der Vorratsbehälter (2) liegt, und die eine Eintrittsöffnung (3') und eine Austrittsöffnung (3") für den Teig aufweist, wobei der Vorratsbehälter (3) an seinem unteren Teil über die Eintrittsöffnung (3') in die Füllkammer (3) mündet, zumindest eine Dosierkammer (4), die eine Eintritts-/Austrittsöffnung (4') für den Teig (1) aufweist und für eine Bewegung ausgehend von einer Position für eine Überführung und das Einfüllen des von der Füllkammer (3) kommenden Teiges (1), in der die Austrittsöffnung (3") der Füllkammer (3) der Eintritts-/Austritts-Öffnung (4') der Dosierkammer (4) gegenüberliegt, zu einer Position zum Ausstoßen des Teiges (1) in Form eines Teigstückes (1'), auf eine Abführungs-Halterung (8) ausgebildet ist, ein Ansaug- und Presselement (5) für den Teig in die Füllkammer (3), ein Schneid- und Verschluss-Element (6), das zum Abschneiden des Teiges am Ausgang des Vorratsbehälters (2) und zum Verschließen der Eintrittsöffnung (3') für den Teig in die Füllkammer (3) ausgebildet ist, ein Dosier- und Ausstoßelement (7) für den Teig in Form des Teigstückes (1') aus der Dosierkammer (4), und eine Verschlussfläche (9) für die Austrittsöffnung (3") der Füllkammer (3) umfasst, wobei jede Dosierkammer (4), jedes Ansaug- und Presselement (5), jedes Dosier- und Ausstoßelement (7) und schließlich jedes Schneid- und Verschlusselement (6) durch eine jeweilige eigene Betätigungsvorrichtung (10, 11, 12, 13) betätigt werden, und die eigenen Betätigungseinrichtungen zur Steuerung und voneinander unabhängigen Betätigung durch eine Zentraleinheit einer Rechnersteuerung (14) ausgebildet sind,
wobei das Verfahren aus einem Funktionszyklus mit einer unabhängigen Steuerung jeder Dosierkammer (4), jedes Ansaug- und Presselementes (5), jedes Dosier- und Austoßelementes (7) und jedes Schneid- und Verschlusselementes (6) über eine jeweilige eigene Betätigungsvorrichtung (10, 11, 12, 13) besteht, um die Einleitung der Überführung des von der Füllkammer (3) kommenden Teiges (1) in jede entsprechende Dosierkammer (4) zu ermöglichen, und zwar lediglich dann, wenn die Eintritts-/Austrittsöffnung (4') jeder Dosierkammer (4) gegenüberliegend oder im Wesentlichen gegenüberliegend zu der Austrittsöffnung (3') der Füllkammer (3) angeordnet ist,
wobei die unabhängige Steuerung jeder jeweiligen eigenen Betätigungseinrichtung (10, 11, 12, 13) unter anderem einerseits zur Steuerung des Komprimierens des von dem Vorratsbehälter (2) kommenden Teiges in jeder Dosierkammer (4) ausgebildet ist, und **dadurch gekennzeichnet, dass** die unabhängige Steuerung jeder Betätigungseinrichtung andererseits zur Steuerung der Ansaugzeit des aus dem Vorratsbehälter (2) kommenden Teiges (1) in die Füllkammer (3) derart ausgebildet ist, um eine höhere Ansaugzeit des Teiges (1) auf einer vorgegebenen Dauer, während eines Funktionszyklus definiert wird, um jedes Abreißen des Teiges (1) während seines Durchlaufs von dem Vorratsbehälter (2) in die Füllkammer (3) zu vermeiden.

2. Verfahren nach Anspruch 1, **dadurch gekennzeichnet, dass** es für einen Funktionszyklus ausgehend von einem Anfangsschritt, in dem der Vorratsbehälter (2) den in Teigstücke (1') zu unterteilenden Teig enthält und in dem die Eintrittsöffnung (3') der Füllkammer (3) verschlossen ist, und jede Dosierkammer (4) im Wesentlichen am Ausstoßpunkt angeordnet ist, aus den folgenden aufeinanderfolgenden Schritten besteht:
- Steuern des Schneid- und Verschluss-Elementes (6) und des Ansaug- und Presselementes (5) derart, dass der Teig (1) aus dem Vorratsbehälter (2) in die Füllkammer (3) im Wesentlichen durch die Wirkung eines Unterdruckes in der letzteren bis zu ihrer vollständigen Füllung mit Teig (1) angesaugt wird, dann
- sobald die Füllung der Füllkammer (1) mit dem Teig abgeschlossen ist, Steuern des Ansaug- und Presselementes (5), und gegebenenfalls Steuern der Schneid- und Verschluss-Einrichtung (6) derart, dass die Eintrittsöffnung (3') der letzteren verschlossen wird und diese von dem unteren Teil des Vorratsbehälters (2) getrennt wird, dann
- sobald der vollständige Verschluss der Eintrittsöffnung (3') in die Füllkammer (3) abgeschlossen ist, Steuern der Bewegung jeder Dosierkammer (4) ausgehend von ihrer Ausstossposition zu ihrer Position zum Überführen und Einfüllen von Teig (1) und Steuern des Dosier- und Ausstosselementes (7) jeder Dosierkammer (4) derart, dass die Eintritts-/Austrittsöffnung (4') jeder dieser Dosierkammern (4) verschlossen wird, um jede Überführung des Teiges (1) aus der Füllkammer (3) in jede Dosierkammer (4) während der Bewegung und dann zu vermeiden, wenn die Eintritts-/Austritts-Öffnung (4') jeder Dosiervorrichtung (4) teilweise der Austritts-Öffnung (3") der Füllkammer (3) gegenüberliegt, dann
- sobald die Eintritts-Austritts-Öffnung (4') jeder Dosierkammer (4) im Wesentlichen der Ausgangsöffnung (3") der Füllkammer (3) gegenüberliegt, was der Position der Übertragung und der Füllung jeder Dosierkammer (4) entspricht, Steuern des Dosier- und Ausstosselementes (7) jeder Dosierkammer (4), während das Ansaug- und Presselement (5) der Füllkammer (3) derart geteuert wird, dass die Überführung des Teiges (1) aus der letzteren in die entsprechende(n) Dosierkammer oder Dosierkammern (4) bewirkt wird, dann
- sobald die Dosierkammer (4) mit einer gewünschten Menge des Teiges (1) gefüllt ist, Steuern der Bewegung jeder Dosierkammer (4) ausgehend von ihrer Übertragungs- und Füllposition bis zu ihrer Ausstossposition, während das Ansaug- und Presselement (5) der Füllkammer derart gesteuert wird, dass ein gesteuerter Druck auf den Teig (1) aufrechterhalten wird,
- sobald die Ausstossposition jeder Dosierkammer (4) erreicht ist, Steuern des Dosier- und Ausstosselementes (7) jeder Dosierkammer (4) derart, das aus jeder Dosierkammer (4) das entsprechende Teigstück (1') auf eine Abführungsvorrichtung (8) ausgestoßen wird, während das Ansaug- und Druckelement (5) der Füllkammer (3) und das Schneid- und Verschlusselement (6) derart gesteuert wird, dass das Ansaugen des Teiges (1) aus dem Vorratsbehälter (2) in die Füllkammer (3) eingeleitet wird, um diese zu füllen.

## Claims

1. Volumetric-division method carried out by a divider comprising a hopper (2) containing dough (1) and at least one assembly comprising a forcing chamber (3) surmounted by the said hopper (2) and comprising an inlet opening (3') and an outlet opening (3") for the dough, the said hopper (2) opening at its bottom part, via the said inlet opening (3'), into the said forcing chamber (3), at least one metering chamber (4) comprising an inlet/outlet opening (4') for the dough (1) and which can be moved from a point of transfer and of filling with dough (1) coming from the forcing chamber (3), in which position the outlet opening (3") of the said forcing chamber (3) faces the inlet/outlet opening (4') of the said metering chamber (4), to a point of ejection of the dough (1), in the form of a piece (1') of dough, onto a discharge support (8), a member (5) for sucking and pushing the dough into the said forcing chamber (3), a cutting and shutting-off member (6) able to cut the dough leaving the hopper (2) and to shut off the inlet opening (3') via which the dough enters the said forcing chamber (3), a metering and ejection member (7) for metering the dough and ejecting it in the form of a piece (1') of dough from the metering chamber (4) and a shutting-off surface (9) for shutting off the outlet opening (3") of the said forcing chamber (3), each metering chamber (4), each sucking and pushing member (5), each metering and ejection member (7), and possibly each cutting and shutting-off member (6) being actuated by a respective dedicated actuating means (10, 11, 12, 13), and the said dedicated actuating means being able to be controlled and actuated independently of one another by a computerized central control unit (14),
the method involving, for an operating cycle, individually controlling each metering chamber (4), each sucking and pushing member (5), each metering and ejection member (7) and possibly each cutting and shutting-off member (6) via the respective dedicated actuating means (10, 11, 12, 13), to allow the dough (1) coming from the forcing member (3) to enter and be transferred into each corresponding metering chamber (4), but only when the inlet/outlet opening (4') of each metering chamber (4) is positioned facing or substantially facing the outlet opening (3") of the said forcing chamber (3),
individual control of each respective dedicated actuating means (10, 11, 12, 13) being designed such that it also controls firstly the compression of the dough in each metering chamber (4) and, **characterized in that** the said individual control of each actuating means is designed on the other hand to control the time for which suction is applied to the dough (1) from the hopper (2) to suck it into the forcing chamber (3) so as to define a suction time for the dough (1) that is greater, in an operating cycle of a given duration so as to avoid any tearing of the said dough (1) as it passes from the hopper (2) into the forcing chamber (3).

2. Method according to Claim 1, **characterized in that** it consists, for an operating cycle, starting from the initial step in which the hopper (2) contains dough (1) that is to be divided into pieces (1'), in which the inlet opening (3') of the forcing chamber (3) is closed off and in which each metering chamber (4) is positioned substantially at the ejection point, in the following successive steps:
- in operating the cutting and shutting-off member (6) and the sucking and pushing member (5) so as to suck the dough (1) from the hopper (2) into the forcing chamber (3) by an effect essentially of reduced pressure into the latter until it becomes completely full of dough (1), then
- once the filling of the forcing chamber (3) with dough is over, in operating the suction and pushing member (5) and, where appropriate, in operating the cutting and shutting-off member (6) so as to shut off the inlet opening (3') to this chamber and thereby the bottom part of the hopper (2), then
- once the inlet opening (3') to the forcing chamber (3) has been completely shut off, in causing each metering chamber (4) to move from its ejection point to its point of transfer and of filling with dough (1) and in operating the metering and ejection member (7) of each metering chamber (4) so as to close the inlet/outlet opening (4') of each of the said metering chambers (4) so as to prevent any transfer of dough (1) from the forcing chamber (3) into each metering chamber (4) while it is moving and when the inlet/outlet opening (4') of each metering chamber (4) only partially faces the outlet opening (3") of the forcing chamber (3), then
- once the inlet/outlet opening (4') of each metering chamber (4) is more or less facing the outlet opening (3") of the forcing chamber (3), which corresponds to the point of transfer and of filling of each metering chamber (4), in operating the metering and ejection member (7) of each metering chamber (4) while at the same time operating the sucking and pushing member (5) of the said forcing chamber (3) so as to transfer the dough (1) from the latter chamber into the corresponding metering chamber or chambers (4), then
- once each metering chamber (4) is full of a desired quantity of dough (1), in causing each metering chamber (4) to move from its point of transfer and of filling to its ejection point, while at the same time operating the sucking and pushing member (5) of the forcing chamber so as to maintain a controlled pressure on the dough (1),
- once the ejection point of each metering chamber (4) has been reached, in operating the metering and ejection member (7) of each metering chamber (4) so as to eject the corresponding piece (1') of dough from each metering chamber (4) onto a discharge support (8), all the while operating the sucking and pushing member (5) of the forcing chamber (3) and the cutting and shutting-off member (6) so as to begin to suck dough (1) from the hopper (2) into the forcing chamber (3) with a view to filling same.
